# EUROPÄISCHE PATENTSCHRIFT

(11) **EP 2 249 948 B1**
(45) Veröffentlichungstag und Bekanntmachung des Hinweises auf die Patenterteilung: **24.06.2015**
(21) Anmeldenummer: 09716244.0
(22) Anmeldetag: 17.02.2009
(51) Int. Cl.: B01D 53/047, C01B 3/56, C01B 3/34

(54) **VERFAHREN UND VORRICHTUNG ZUR ABSCHEIDUNG VON FREMDGASEN AUS EINEM REDUZIERENDEN NUTZGAS DURCH DAMPFBETRIEBENE DRUCKWECHSELADSORPTION**
METHOD AND DEVICE FOR THE SEPARATION OF FOREIGN GASES FROM A REDUCING USEFUL GAS BY PRESSURE SWING ADSORPTION
PROCÉDÉ ET DISPOSITIF DE SÉPARATION DE GAZ ÉTRANGERS CONTENUS DANS UN GAZ UTILE RÉDUCTEUR PAR ADSORPTION MODULÉE EN PRESSION À VAPEUR

(30) Priorität: 05.03.2008 DE 102008012735
(43) Veröffentlichungstag der Anmeldung: 17.11.2010
(73) Patentinhaber: ThyssenKrupp Industrial Solutions AG, 45143 Essen (DE)
(72) Erfinder: VON TROTHA, Thilo, 59379 Selm (DE); LIU, Vincent, 44795 Bochum (DE); WYSCHOFSKY, Michael, 44135 Dortmund (DE)
(74) Vertreter: Brosch, Oliver
(86) Internationale Anmeldenummer: PCT/EP2009/001092
(87) Internationale Veröffentlichungsnummer: WO 2009/109290

(56) Entgegenhaltungen:
- EP-A- 0 864 351
- EP-A- 1 101 731
- US-A- 3 141 748

## Beschreibung

Die Erfindung betrifft ein Verfahren zur Reinigung eines reduzierenden Nutzgases durch Druckwechseladsorption unter Einsatz eines sogenannten Ejektors, der durch ein unter Druck stehendes Gas angetrieben wird und ein Vakuum erzeugt, das die Desorption der Druckwechseladsorptionseinheit verbessert, wobei die Erfindung als unter Druck stehendes Gas Dampf nutzt, der durch die Heizeinrichtung zur Herstellung des Nutzgases erzeugt wird. Die Erfindung betrifft auch eine Vorrichtung mit einem Ejektor, der durch Dampf angetrieben wird und dessen Vakuum dazu genutzt wird, eine Druckwechseladsorptionseinheit stärker zu desorbieren.

Die Herstellung von reduzierenden Gasen ist in der Technik ein häufig durchgeführter Prozess. Ein Beispiel für die Herstellung eines reduzierenden Gases ist der Dampfreformierprozess. Durch Erhitzen eines kohlenwasserstoffhaltigen Ausgangsgemisches mit Wasserdampf lässt sich beispielsweise Synthesegas herstellen, das ein Gemisch aus Wasserstoff, Kohlenmonoxid und Kohlendioxid darstellt. Synthesegas wird sehr häufig als Brenngas oder als Ausgangstoff für chemische Synthesen verwendet. Ein weiteres, häufig hergestelltes reduzierendes Gas ist Kohlenmonoxid.

Für die meisten Anwendungen muss das reduzierende Gas frei von Begleitgasen sein. Ein häufig vorkommendes Begleitgas ist Kohlendioxid, welches bei den Verbrennungs- oder Reformierprozessen entsteht. Wandelt man das Kohlenmonoxid aus dem Synthesegas durch eine sogenannte CO-Konvertierung in Anwesenheit von Wasserdampf um, so erhält man ein Gemisch aus Wasserstoff und Kohlendioxid. Letzteres kann aus dem Synthesegas durch verschiedene Verfahren entfernt werden. Durch Entfernung des Kohlendioxids erhält man reinen Wasserstoff, der ein wichtiger Grundstoff für viele Synthesen und Anwendungszwecke ist. Weitere, häufig vorkommende Begleitgase oder Fremdgase oder Fremdgaskomponenten, die in reduzierenden Gasen unerwünscht sind und abgetrennt werden müssen, sind Restgaskomponenten wie Methan und Stickstoff.

Für viele Zwecke werden zur Abtrennung der unerwünschten Begleitgase Gaswaschprozesse eingesetzt, die für die genanntem Zwecke geeignet sind. Häufig werden auch sogenannte Druckwechseladsorptionsanlagen eingesetzt, die das abzuscheidende Gas durch Adsorptionsprozesse abfangen. Druckwechseladsorptionsanlagen können Fremdgase durch Adsorption fast vollständig entfernen, was durch Gaswaschprozesse nur bedingt möglich ist.

Druckwechseladsorptionsanlagen nutzen die Adsorptionsfähigkeit von adsorbierenden Materialien. Beispiele für häufig verwendete adsorbierende Materialien sind Aktivkohle, Molekularsiebe, Silicagel oder Zeolithe. Zum Zweck der Gasreinigung werden die adsorbierenden Materialien in geeignete Behälter gepackt, die unter Druck von dem zu reinigenden Gas durchströmt werden. Dabei werden die Fremdgaskomponenten adsorbiert und man erhält das gereinigte Nutzgas. Nach einer bestimmten Zeit ist die Aufnahmefähigkeit des adsorbierenden Materials erschöpft. Der Behälter wird entspannt und mit Nutzgas gespült, so dass das adsorbierende Material das adsorbierte Fremdgas freigibt. Dieses wird dann einer Weiterverwendung oder Entsorgung zugeführt. Die Vorgänge der Adsorption und Desorption werden in zyklischem Wechsel durchgeführt, um bereitgestelltes Nutzgas kontinuierlich reinigen zu können.

Um die Effizienz des Adsorptionsprozesses weiter zu verbessern, kann der Prozess der Desorption nach der Entspannung durch Anlegen eines Vakuums unterstützt werden. Dadurch kann das adsorbierte Fremdgas nahezu vollständig aus dem adsorbierenden Material entfernt werden. Das adsorbierende Material steht dann wieder vollständig für einen Adsorptionsprozess zur Verfügung. Um die Vakuumerzeugung durch einen teureren Kompressor- oder andersartigen Maschineneinsatz zu vermeiden, wird ein sogenannter Ejektor eingesetzt. Dieser nutzt den Druck des ausströmenden Gases durch Ausnutzung des Venturi-Effektes zur Erzeugung von Vakuum. Durch eine geeignete Ventilschaltung, bei der das ausströmende Gas durch den Ejektor strömt, kann dann eine ausreichende Evakuierung der Druckwechseladsorptionsgefäße erreicht werden.

Die EP 015413 B1 beschreibt einen Prozess zur Druckwechseladsorption, der eine Anordnung von Druckwechseladsorptionseinheiten zur Verfügung stellt, die in zyklischem Wechsel ein Gasgemisch durch selektive Adsorption eines Bestandteiles oder mehrerer Gasbestandteile das Gas von diesen befreien. Zur schrittweisen Desorption der adsorbierten Fremdgase wird ein Vakuum eingesetzt, das mit Hilfe eines Ejektors erzeugt wird. Der Ejektor wird durch den Druck der aus den Druckwechseleinheiten ausströmenden Gase betrieben, wobei durch geeignete Verknüpfung der Druckwechseladsorptionseinheiten und Ventilschaltungen sowohl das ausströmende Nutzgas als auch das ausströmende desorbierte Fremdgas genutzt werden kann.

Die EP 1101731 A1 beschreibt ein Verfahren zur Herstellung von Synthesegas in Verbindung mit einer Druckwechseladsorptionsanlage, durch die das Synthesegas von mitgeführtem Kohlendioxid befreit wird. Das Vakuum zur Desorption der Druckwechseleinheit wird durch einen Ejektor erzeugt, wobei der Ejektor zum Betrieb den hohen Druck, unter dem das Heizgas bei der Versorgung steht, ausnutzt. Das den Ejektor verlassende Gas kann wieder als Brenngas verwendet werden. Durch ein System von Vorlagebehältern können sowohl das Brenngas als auch das Vakuum der jeweiligen Kapazität angepasst werden.

Häufig ist jedoch das Vakuum, das durch die Ejektoren erzeugt wird, nicht ausreichend. Aus diesem Grund ist es nötig, Vorrichtungen hinzuzuziehen, mit denen sich das Vakuum weiter erhöhen lässt. Dies ist teuer und meist mit hohem Aufwand verbunden. Auch ist der Druck des ausströmenden Gases nicht immer hoch genug, um den Ejektor so zu betreiben, dass ein ausreichendes Vakuum erzeugt wird. Die Verwendung von komprimiertem Gas ist aus Kostengründen unzweckmäßig. Deshalb wird nach einer preiswerten Möglichkeit gesucht, die Ejektoren mit einer verbesserten Effizienz zu betreiben.

Die EP 864351 A2 beschreibt ein Verfahren zur Durchführung einer Vakuumwechselabsorption, wobei Luft in einen sauerstoffangereicherten und in einen sauerstoffabgereicherten Strom aufgetrennt wird, und das Vakuum für die Vakuumwechselabsorption durch Dampf unter Druck erzeugt wird, und der unter Druck stehende Dampf durch eine exotherme chemische Reaktion erzeugt wird, welche mit dem sauerstoffangereicherten Strom versorgt wird und in welcher der Sauerstoff ein Reaktant ist. Die Erzeugung des Vakuums durch den Dampf wird durch mindestens einen sogenannten Eduktor vorgenommen. Das Verfahren ist für die Abtrennung von nutzbaren Gasen aus einem Gasgemisch nicht geeignet, da das abgetrennte sauerstoffangereicherte Gas zur Erzeugung des Dampfes genutzt wird. Ferner stehen die aufgetrennten Gase nicht unter Druck.

Es ist deshalb eine Aufgabe der Erfindung, ein Gas zur Verfügung zu stellen, das unter hohem Druck steht, das kostengünstig ist, das möglichst durch den Herstellungsprozess für das Nutzgas erzeugt werden soll und mit dem sich die Ejektoren kostengünstig betreiben lassen.

Die Erfindung löst diese Aufgabe durch das Verfahren gemäß Anspruch 1 bzw die Vorrichtung gemäß Anspruch 9.

Die Erfindung stellt auch eine Lösung zur Verfügung, das Vakuum beim Desorptionsprozess den jeweiligen Anforderungen anzupassen, so dass die Kapazität der Druckwechseleinheit optimiert werden kann. Es wird auch ein System von Vorlagebehältern vorgeschlagen, die als Pufferbehälter für Vakuum und desorbierte Gase zur Verfügung stehen. Dadurch kann der Prozessfluss kontinuierlich gestaltet werden, ohne dass die Reinigungsleistung der Druckwechseladsorptionseinheit abgeschwächt wird. Das erfindungsgemäße System zum Betrieb einer Druckwechseladsorptionseinheit eignet sich sehr gut im Betrieb von Dampfreformierprozessen. Das erfindungsgemäße System zum Betrieb von Druckwechseladsorptionseinheiten eignet sich jedoch prinzipiell für jeden Prozess, der ein reduzierendes Gas produziert, durch Druckwechseladsorption reinigt und heiße Rauchgase und Heizgase zur Verfügung stellt, mit denen sich Dampf zum Betrieb eines Ejektors herstellen lässt.

Beansprucht wird ein Verfahren zur Abscheidung von Fremdgasen aus einem reduzierenden Nutzgas durch Druckwechseladsorption, wobei
- durch ein geeignetes Verfahren ein reduzierendes Nutzgas hergestellt wird, welches neben der reduzierenden Komponente auch eine zu absorbierende Fremdkomponente oder ein Fremdgas enthält, und
- dieses Gas zur Abscheidung von adsorbierbaren Gasen unter erhöhtem Druck einer Druckwechseladsorptionseinheit zugeführt wird, die das zu absorbierende Gas durch einen adsorptiven Prozess zurückhält, so das man ein gereinigtes Nutzgas erhält, und
- die adsorbierten Gase durch Entspannung der Druckwechseladsorptionseinheit im Gemisch mit Nutzgas wieder freigesetzt werden und weiterverwendet oder entsorgt werden können, und
- an die Druckwechseladsorptionseinheit nach der Entspannung mit einem Ejektor zur Desorption ein Vakuum angelegt wird, wodurch die restlichen adsorbierten Gase aus der Druckwechseladsorptionseinheit abgezogen werden können,
   und das dadurch gekennzeichnet ist, dass
- der Ejektor mit Dampf angetrieben wird, der durch Erhitzen mit dem heißen Nutzgas und mit, den Rauchgasen aus dem Heizprozess zur Erzeugung des Nutzgases erzeugt wird.

Der Dampf zum Betrieb des Ejektors kann erfindungsgemäß sowohl in der Ausführungsvorrichtung für das Heizgas als auch in der Ausführungsvorrichtung für das Nutzgas erzeugt werden. Die Dampferzeugung kann auch an beiden Positionen im Prozessfluss erfolgen, wobei die entstehenden Dampfströme dann beliebig vermischt werden können und durch entsprechende Rohrleitungen in den Ejektor transportiert werden. Wird nur an einer der genannten Positionen im Prozessfluß ein Dampferzeuger als Wärmetauscher verwendet, so kann sich an einer der anderen Positionen, an der kein Dampf erzeugt wird, ein normal gearteter Kühler, wie beispielsweise ein Luftkühler, befinden. Nach diesen Prozessschritten erhält man ein gekühltes Synthesegas.

Die Erfindung beansprucht auch ein Verfahren, mit dem sich der Dampf zum Betrieb des Ejektors kondensieren lässt, so dass dieser wieder in den Prozess zur Erzeugung des Dampfes zurückgeführt werden kann. Es ist auch möglich, den kondensierten Dampf dem Prozess zur Erzeugung des Nutzgases zuzuführen. Prinzipiell ist es möglich, den kondensierten Dampf für alle beliebigen Zwecke zu verwenden.

Bevorzugt ist der Prozess zur Erzeugung des Nutzgases ein Reformierprozess, der ein kohlenwasserstoffhaltiges Ausgangsgas nutzt, um mit Wasserdampf durch einen Reformierprozess bei erhöhter Temperatur Synthesegas herzustellen. Als kohlenwasserstoffhaltiges Ausgangsgas wird bevorzugt Erdgas eingesetzt. Man kann jedoch auch LPG-Gas einsetzen oder ein Flüssiggas. Es ist auch möglich, Naphtha oder Leichtbenzine und alle anderen Stoffe einzusetzen, die als Einsatzstoff für einen Reformierprozess geeignet sind. Der erfindungsgemäße Prozess zum Betrieb des Ejektors kann schließlich prinzipiell in allen anderen Prozessen zur Erzeugung von reduzierenden Gasen genutzt werden. So ist es beispielsweise auch möglich, eine erfindungsgemäße Druckwechseladsorptionseinheit in einem Prozess zur Vergasung von Kohle zu nutzen. Schließlich ist es auch möglich, den Prozess beispielsweise bei einer Herstellung von Kokereigas zu nutzen.

Bei der Herstellung von Synthesegas erhält man je nach Prozessführung ein Synthesegas, das größere Mengen an Kohlenmonoxid enthält. Je nach Verwendungszweck ist dieses in dem erhaltenen Synthesegas unerwünscht. Aus diesem Grund wird das Kohlenmonoxid häufig aus dem Prozessgas durch eine sogenannte CO-Konvertierung entfernt. Bei der CO-Konvertierung wird das in dem Synthesegas enthaltene Kohlenmonoxid durch Zugabe von Wasserdampf in Kohlendioxid umgewandelt, welches anschließend aus dem Synthesegas beispielsweise durch eine Sauergaswäsche entfernt werden kann. Bei der Konvertierung wird Wasserstoff erhalten. Einen geeigneten Prozess zur Konvertierung von Kohlenmonoxid in Kohlendioxid beschreibt die EP 1878782 A1. Dem Prozess der Konvertierung geht in einer Ausführung der Erfindung eine Kühlung des Synthesegases zuvor, wobei diese Kühlung als Wärmetauschprozess oder zur Dampferzeugung genutzt werden kann. Auch hinter dem Prozessschritt der wärmeerzeugenden CO-Konvertierung kann Dampf erzeugt werden und dieser in den Dampffluß zum Betrieb des Ejektors eingespeist werden. Ist hinter dem Prozessschritt für die Konvertierung kein Dampferzeuger vorgesehen, so kann sich dort auch ein normaler Kühler befinden. Nach diesen Prozessen erhält man ein gekühltes kohlenmonoxidfreies Synthesegas.

Um das Kohlendioxid vollständig aus dem Synthesegas zu entfernen, wird in der Regel eine Druckwechseladsorptionsanlage eingesetzt. Es ist möglich, diese allein oder in Verbindung mit einer beliebig gearteten Sauergaswäsche einzusetzen. Bei einem geringen Anteil an zu adsorbierenden Gasen reicht in der Regel der Betrieb einer Druckwechseladsorptionsanlage ohne vorhergehende Sauergaswäsche aus. Die Druckwechseladsorptionsanlage kann zur Entfernung des Sauergases einfach geartet sein und bei Normaldruck beladen werden, so dass nur zur Desorption des beladenen Adsorbens ein Unterdruck angelegt werden muss. Die Druckwechseladsorption kann beispielhaft kontinuierlich betrieben werden, so dass die Adsorption des zu adsorbierenden Gases nur durch die Adsorptionskraft des Adsorbens erfolgt. In einer vorteilhaften und bevorzugten Ausführungsform wird die Druckwechseladsorptionseinheit jedoch bei Überdruck betrieben, um die Adsorptionskraft des Adsorbens besser auszunutzen.

Typische Drücke zum Betrieb einer Druckwechseladsorptionseinheit sind Drücke von 5 bis 50 bar. Zur Desorption wird die Einheit entspannt. Um den Prozess dennoch kontinuierlich betreiben zu können, muss die Adsorption in zyklischem Wechsel mit der Desorption durchgeführt werden. Hierfür werden üblicherweise Batterien eingesetzt, in denen 5 bis 50 Einheiten zur Druckwechseladsorption nebeneinander betrieben werden. Ein Teil der Einheiten wird unter erhöhtem Druck von dem zu reinigenden Gas durchströmt, wodurch das Fremdgas von dem Adsorbens zurückgehalten wird. Man erhält das gereinigte Nutzgas. Ein weiterer Teil der Einheiten wird entspannt, wodurch das adsorbierte Gas im Gemisch mit dem Nutzgas freigegeben wird. Bei der anschließenden Evakuierung des Gefäßes erhält man im Wesentlichen das desorbierte Fremdgas zurück. Die Entspannung und Desorption kann auch stufen- oder schrittweise durchgeführt werden, um die Trennwirkung der Druckwechseladsorptionseinheiten noch weiter zu erhöhen.

Das desorbierte Gas besteht in der Regel zum größten Teil aus dem adsorbierten Fremdgas. Es enthält jedoch je nach Prozessführung noch größere Anteile an unverbrauchtem Nutzgas. Da dieses noch einen Heizwert besitzt, der zwar aufgrund des beigemengten, aber in der Regel unbrennbaren Fremdgases reduziert ist, kann dieses für den Verbrennungsprozess zur Erzeugung des Nutzgases verwendet werden. Um den Brennwert für den Heizprozess genügend hoch zu halten, wird dieses in einer vorteilhaften Ausführungsform mit frischem Heizgas vermischt. Um den Prozess der Nutzgaserzeugung von dem Prozess der Druckwechseladsorption abzukoppeln, befindet sich in einer Ausführung der Erfindung zwischen dem Druckwechseladsorptionsgefäßen und der Einspeisung in das Heizgas ein Pufferbehälter, in dem das desorbierte Fremdgas zwischengelagert werden kann. Es ist aber auch möglich, das desorbierte Gas beispielsweise in einer Fackelleitung zu entsorgen. Dies kann temporär oder permanent erfolgen.

Um die Druckhaltung in der Brenngasversorgungsleitung nicht zu beeinflussen, wird der Ejektor und der Druck im damit verbundenen Pufferbehälter vorzugsweise so geregelt, dass das einzuspeisende desorbierte Fremdgas mit gleichem oder ähnlichem Druck bereitgestellt wird, mit dem das Heizgas in den Heizprozess zur Erzeugung des Nutzgases eingespeist wird. Handelt es sich bei der Nutzgaserzeugung um einen Reformierprozess, so ist das Heizgas bevorzugt Erdgas. Typische Drücke des Heizgases zum Einspeisen in den Verbrennungsprozess sind 1,2 bis 5 bar. Zum Erreichen dieses Druckes können sich zwischen dem Pufferbehälter und der Einspeisestelle in die Heizgasleitung auch regelnde Einrichtungen befinden. Dies können sowohl Kompressoren sein als auch Druck reduzierende Vorrichtungen. Das desorbierte Fremdgas kann sowohl direkt vor dem Brenner durch geeignete Mischvorrichtungen als auch in die Versorgungsleitung für Brenngas eingespeist werden.

In einer weiteren Ausführung der Erfindung wird das erzeugte Vakuum vorteilhaft über einen Pufferbehälter zwischengelagert. Dieser kann auch als Vakuumvorlagebehälter bezeichnet werden. Dadurch lässt sich je nach Anforderung das Vakuum an die verschiedenen Druckwechseladsorptionsgefäße anlegen. Auch lässt sich das Vakuum auf diese Weise schrittweise reduzieren, um die Trennwirkung der Druckwechseladsorptionseinheiten zu verbessern. Der Unterdruck im Vorlagebehälter kann durch geeignete Vorrichtungen verstärkt werden.

Auch das Treibgas für den Ejektor, das für das erfindungsgemäße Verfahren Dampf aus dem Heizprozess für die Nutzgaserzeugung ist, kann mit weiteren Gasen beaufschlagt werden, um den für den Antrieb des Ejektors notwendigen Druck zu erzeugen. So kann man zum Antrieb des Ejektors auch Fremdgase oder Frischdampf einsetzen, die unter Druck stehen. Für den Antrieb des Ejektors können schließlich auch das Nutzgas oder das Einsatzgas verwendet werden, wie es in der EP 015413 B1 vorgeschlagen wird. Für die Ausführung des erfindungsgemäßen Verfahrens werden diese Fremdgase mit Dampf vermischt. Schließlich ist es auch möglich, den oder die Ejektoren zeitweise mit dem erfindungsgemäß erzeugten Dampf zu betreiben. Man kann den Dampf aber auch mit Fremdgas oder mit Fremddampf oder mit dem Synthesegas vermischen und erfindungsgemäß als Treibmittel für den Ejektor einsetzen. Auch dies kann zeitweise geschehen.

Der Ejektor kann zur Unterstützung des Betriebes auch mit Vakuum erzeugenden Einrichtungen unterstützt werden. Das Fremdvakuum kann auf beliebige Art und Weise erzeugt werden. Dies können beispielhaft Vakuum erzeugende Kolbenpumpen oder Membranpumpen sein. Es ist auch möglich, den Prozess an beliebiger Stelle mit Kompressoren oder Druck erzeugenden Pumpen zu unterstützen.

Die Erfindung beansprucht auch eine Vorrichtung, mit der sich der erfindungsgemäße Prozess ausführen lässt. Beansprucht wird insbesondere eine Vorrichtung zur Abscheidung von Fremdgasen aus einem reduzierenden Nutzgas durch Druckwechseladsorption, die
- einen Anlagenteil mit einer Heizeinrichtung zur Erzeugung des Nutzgases umfasst, wobei
- sich an den Anlagenteil zur Erzeugung des Nutzgases ein Anlagenteil mit einer Druckwechseladsorption zur Abscheidung von Fremdgasen anschließt, und
- der Anlagenteil zur Druckwechseladsorption über einen Ejektor, der zur Erzeugung eines Unterdrucks geeignet ist, zur vollständigen Desorption mit Vakuum beaufschlagbar ist,
   dadurch gekennzeichnet, dass
- sich hinter der Heizeinrichtung oder dem Anlagenteil zur Erzeugung des Nutzgases ein Dampferzeuger befindet, der das heiße Rauchgas aus dem Heizprozess und heiße Nutzgas zur Erzeugung von heißem Dampf nutzt, und
- der aus dem Dampferzeuger stammende Dampf zum Antrieb des Ejektors genutzt wird.

Der einzusetzende Ejektor kann beliebig geartet sein. Dieser kann beispielsweise nach dem Venturi-Prinzip arbeiten. Es kann sich jedoch auch um eine Vakuumerzeugende Einrichtung handeln, die Turbinen zur Erzeugung eines Vakuums mit Druckgas nutzt.

Zur Ausführung der Erfindung und zur weiteren Nutzung befindet sich hinter dem Ejektor auf der Austrittsseite eine Einrichtung zur Kondensation des Dampfes. Dies kann ein gewöhnlicher Kondensationskühler sein, dies können aber auch Wärmetauscher sein. Möglich ist es auch, Kältemaschinen einzusetzen, um den Kondensationsprozess zu unterstützen. An die kondensierende Einrichtung schließen sich dann bevorzugt Rohrleitungen an, mit denen sich das Kondensat in den Wasserdampf des Ausgangsgases zurückführen lässt. Es können sich hinter diesen Einrichtungen auch Verdampfer befinden, mit denen sich das Kondensat verdampfen lässt, um wieder in den Prozess der Nutzgaserzeugung eingespeist zu werden.

Durch den Kondensationsprozess erhält man getrocknetes und gekühltes Desorptionsgas. Das erhaltene Desorptionsgas kann jedes geeignete Sauergas enthalten, das durch eine Druckwechseladsorption aus dem Nutzgas ausgeschieden werden kann. Beispiele für Sauergase, die mit einer Druckwechseladsorption aus Gasen ausgeschieden werden können, sind Kohlendioxid, Schwefelwasserstoff, Ammoniak oder Halogenwasserstoffe. Wird das Desorptionsgas entsorgt, so enthält der Prozessfluss auch Vorrichtungen, die hierzu geeignet sind. So können sich hinter Kondensationseinrichtung auf der Desorptionsgasseite auch Fackeleinrichtungen befinden.

Vor der erfindungsgemäßen Vorrichtung zur Durchführung der Druckwechseladsorption kann sich auch eine Vorrichtung zur Sauergaswäsche befinden. Diese wird bevorzugt mit physikalischen Lösungsmitteln durchgeführt, die einfach durch Desorption regeneriert werden können und deshalb gut mit einer Druckwechseladsorptionsanlage kombiniert werden können. Ein Beispiel für geeignete Sauergaswäschen, die vor das erfindungsgemäße System zu Druckwechseladsorption geschaltet werden können, gibt die EP 968748 A2.

Ist der Prozess zur Nutzgaserzeugung ein Dampfreformierprozess, so kann dieser mit den bekannten Verfahren ausgeführt werden. Ein Beispiel für einen Dampfreformierprozess, der sich zur Erzeugung von Synthesegas nutzen lässt, wird in der WO 2006/119812 A1 beschrieben. Ist der Prozess zur Erzeugung des Nutzgases ein Kokereiprozess, dann lässt sich dieser mit den bekannten Vorrichtungen ausführen. Ein Beispiel für eine Vorrichtung zur Erzeugung eines Kokereigases beschreibt die EP 1230321 A1.

Aus dem Prozess zur Erzeugung des Nutzgases wird erfindungsgemäß Dampf erzeugt. Hierzu befindet sich in der nutzgaserzeugenden Einrichtung ein Wärmetauscher, der als Dampferzeuger geartet ist. Handelt es sich bei dem Nutzgas um ein Kokereigas, so kann der Dampferzeuger beispielhaft in der Ausführungsleitung für das Kokereigas sitzen. Handelt es sich bei dem Nutzgas um ein Synthesegas aus einem Dampfreformierprozess, so kann der Dampferzeuger in der Ausführungsleitung für das Rauchgas sitzen, das bei der Beheizung zur Herstellung des Synthesegases entsteht.

Das erhaltene Synthesegas aus dem Dampfreformierprozess wird in einer bevorzugten Ausführungsform nach dem Erhalt einer Kühlung unterzogen. Hierzu wird eine geeignete Kühlvorrichtung eingesetzt. Dies kann beispielhaft ein Luftkühler sein. Es ist möglich, zur Kühlung des erhaltenen Synthesegases als Nutzgas einen Wärmetauscher zu verwenden, durch den Dampf erzeugt wird. Auch dieser Dampf kann erfindungsgemäß zum Betrieb des Ejektors verwendet werden. Es ist auch möglich, auf den Dampferzeuger in der Rauchgasausführung zu verzichten und nur den Dampf zum Betrieb des Ejektors einzusetzen, der bei der Kühlung des Nutzgases erhalten wird.

Hinter dem Prozess zur Erzeugung des Nutzgases oder der Vorrichtung zur Kühlung des Nutzgases befindet sich in einer bevorzugten Ausführungsform ein Prozess zur Konvertierung des Kohlenmonoxids in Kohlendioxid. Dann ist das zu absorbierende Sauergas zum größten Anteil Kohlendioxid. Der Prozess der CO-Konvertierung wird in einer geeigneten Ausführungsform in der EP 1878782 A1 beschrieben.

Im Prozessfluss hinter der Einheit für die CO-Konvertierung ist dann die erfindungsgemäße Vorrichtung zur Druckwechseladsorption angeordnet. Ein Beispiel für eine geeignete Vorrichtung zur Druckwechseladsorption mit einer geeigneten Anzahl an verschiedenen Druckwechseladsorptionsgefäßen beschreibt die EP 015413 B1. In dieser Lehre wird beispielhaft auch ein Ejektor beschrieben, wie er zur Erzeugung eines Vakuums für das erfindungsgemäße Verfahren genutzt werden kann.

Erfindungsgemäß ist es auch möglich, im Prozessfluss hinter der Vorrichtung zur Konvertierung des Kohlenmonoxids eine Kühlungsvorrichtung für das Nutzgas anzuordnen. Diese ist dann in einer beispielhaften Ausführung der Erfindung als Wärmetauscher oder Dampferzeuger geartet. Auf diese Weise kann ebenfalls Dampf für den Ejektor erzeugt werden. Erfindungsgemäß ist es möglich, entweder einen Dampferzeuger in der Ausführungseinrichtung für das Heizgas anzuordnen, oder der in der Ausführungseinrichtung für das Nutzgas, vor der Konvertierungseinrichtung für das Kohlenmonoxid anzuordnen, oder in einer weiteren Ausführungsform einen Dampferzeuger hinter der Ausführungseinheit für das konvertierte Nutzgas anzuordnen. Die Anordnung der Dampferzeuger an den genannten Positionen im Prozessfluss kann auch mehrfach und in allen Kombinationen erfolgen.

Die Einheiten zur Druckwechseladsorption sind zur Ausführung des erfindungsgemäßen Verfahrens mit einer geeigneten Anzahl an Ventilen und Rohrleitungen verbunden. Diese sind so mit den Gefäßen zur Druckwechseladsorption verknüpft, dass sich damit ein zyklischer Betrieb zur Adsorption und Desorption der Fremdgase durchführen lässt. Hinter der Druckwechseladsorptionseinheit kann sich vorteilhaft ein Gefäß zur Speicherung des Vakuums befinden, so dass sich diese je nach Anforderung an die Druckwechseladsorptionseinheit anschließen lässt.

An den Ejektor kann sich auf der Austrittsseite ein Kondensator anschliessen, durch den der in dem Austrittsgas erhaltene Dampf auskondensiert wird. Das Kondensat kann in den Prozess zur Erzeugung des Nutzgases zurückgegeben werden. Das Desorptionsgas, das von dem Wasserdampf befreit wurde, wird vorzugsweise in einen Vorlagebehälter für Heizgas gegeben. Aus diesem lässt sich das desorbierte Fremdgas in den Prozess zum Vermischen mit dem Heizgas zurückführen. Dieser Behälter wird auch als Befeuerungsvorlagebehälter bezeichnet. Hinter dem Ejektor kann sich auch eine Vorrichtung befinden, mit der sich das Vakuum des Ejektors verstärken lässt.

Zu der erfindungsgemäßen Vorrichtung gehören auch Rohrleitungen und Ventile, mit der sich die Vorrichtungen für das erfindungsgemäße Verfahren verknüpfen und steuern lassen. In der erfindungsgemäßen Vorrichtung können sich auch an beliebiger Stelle des Prozesses Kühler zur Kühlung oder Vorrichtungen zum Heizen des Gases befinden. Zu der erfindungsgemäßen Vorrichtung gehören auch Kompressoren oder Vakuumpumpen, die den Prozess an jeder beliebigen Stelle im Prozessfluss unterstützen. Zu dem erfindungsgemäßen Prozess gehören auch Thermometer, Druckmessgeräte oder andere Analysengeräte und die damit verbundenen Steuerungseinrichtungen, mit denen sich der Prozess steuern lässt.

Das erfindungsgemäße Verfahren stellt einen Prozess zur Reinigung von reduzierenden Gasen bereit, das effizient und kostengünstig ist. Es nutzt außerdem in vorteilhafter Weise die Wärme des Heizprozesses aus der Erzeugung des Nutzgases. Es ist stellt außerdem ein wirkungsvolles Mittel dar, den Heizwert des teiladsorbierten Gases, das mit Fremdgas verunreinigt ist, zu nutzen.

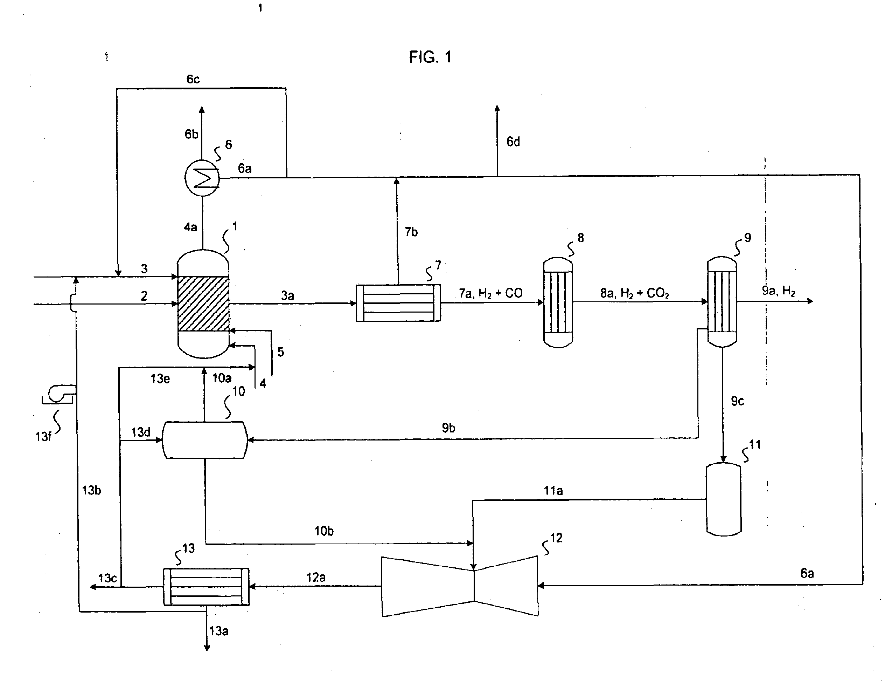

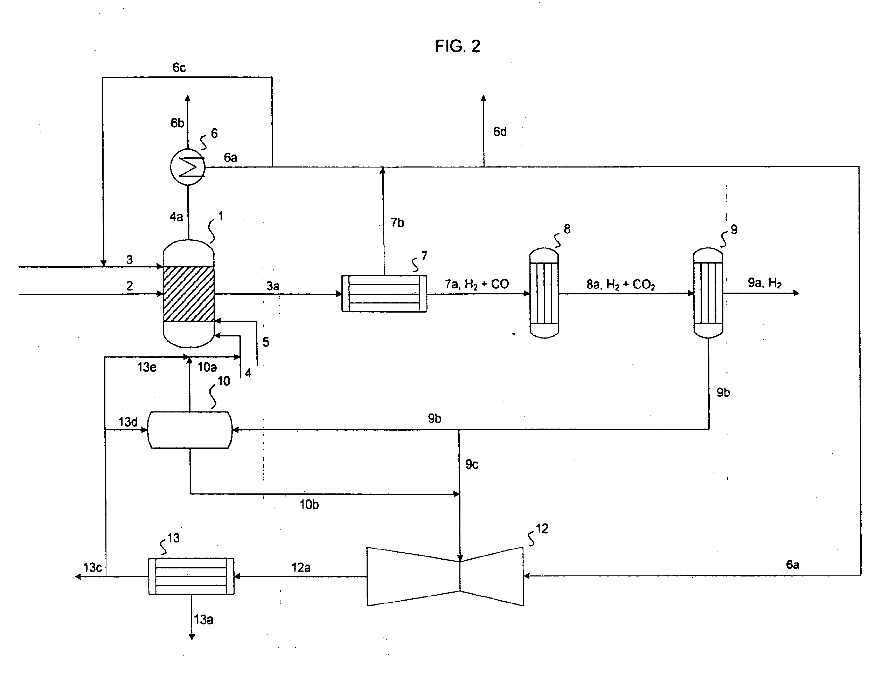

Der Prozessfluss des erfindungsgemäßen Verfahrens wird anhand von zwei Skizzen genauer erläutert, wobei das erfindungsgemäße Verfahren nicht auf diese Ausführungsformen beschränkt ist. FIG. 1 und FIG. 2 zeigen den Prozessfluss des erfindungsgemäßen Verfahrens jeweils mit und ohne Vakuumvorlagebehälter.

FIG. 1 zeigt beispielhaft einen Reformierofen (**1**), der mit einem kohlenwasserstoffhaltigen Einsatzgas (**2**) und Wasserdampf (**3**) beschickt wird. Dieser wird mit einem kohlenwasserstoffhaltigen Heizgas (**4**) und Luft (**5**) beheizt. Dabei erhält man Synthesegas, welches hier beispielhaft als ein Gemisch von Wasserstoff und Kohlenmonoxid dargestellt ist. Bei der Verbrennung des Heizgases entstehen Abgase (**4a**), die über einen Wärmetauscher (**6**) Dampf erzeugen (**6a**). Die Abgase werden anschließend gekühlt als Rauchgase abgegeben (**6b**). Der Dampf kann bedarfsweise direkt in das Ausgangsgas zurückgeführt werden (**6c**) oder über ein Ventil abgeblasen werden (**6d**). Das erhaltene rohe Synthesegas (**3a**) strömt in eine Kühlvorrichtung (**7**), in der es gekühlt und weiter in die Vorrichtung zur Konvertierung von Kohlenmonoxid (**8**) geleitet wird (**7a**). Handelt es sich bei der Kühleinrichtung um einen Wärmetauscher, so kann aus dem heißen Nutzgas Dampf gewonnen werden (**7b**). In der CO-Konvertierung (**8**) wird das in dem rohen Synthesegas enthaltene Kohlenmonoxid (CO) in Kohlendioxid (CO₂) umgewandelt. Dabei erhält man Synthesegas (**8a**) mit einem Überschuss an Kohlendioxid. Dieses wird in die Vorrichtung zur Druckwechseladsorption (**9**) geleitet. In dieser Einheit wird hier beispielhaft das Kohlendioxid entfernt, so dass man ein gereinigtes Synthesegas (**9a**) erhält, welches überwiegend aus Wasserstoff besteht. Bei der Entspannung der Adsorptionsbehälter erhält man überwiegend desorbiertes Fremdgas (**9b**), welches noch mitadsorbiertes Synthesegas enthält. Dieses wird in den Vorlagebehälter für das Heizgas (**10**) gegeben. Von dort aus kann es beliebig in das Heizgas für die Synthesegaserzeugung (**10a**) eingespeist werden. Bedarfweise kann es auch mit dem Desorptionsgas zurückvermischt werden (**10b**). Zur weiteren Desorption (**9c**) wird an die Druckwechseladsorptionseinheit ein Vakuum angelegt, welches über eine Vakuumleitung (**9c**) einem Vakuumvorlagebehälter (**11**) entnommen wird. Das Vakuum in dem Vorlagebehälter (**11**) wird über eine Vakuumleitung (**11a**) durch einen Ejektor (**12**) erzeugt, welcher durch den unter Druck stehenden Dampf (**6a**) aus dem Dampferzeuger (**6**) angetrieben wird. Der Ejektor (**12**) erzeugt zumindest zum überwiegenden Teil das Vakuum im Vakuumvorlagebehälter (**11**). Auf der Austrittsseite erhält man das vakuumdesorbierte Gas (**12a**), welches in einen Kondensator (**13**) geleitet wird. Man erhält dadurch ein Kondensat, welches ausgespeist werden kann (**13a**), zur Dampferzeugung an den Prozess zurückgeführt oder in den Wasserdampf als Ausgangsgas (**3**) zurückgegeben werden kann (**13b**). Das erhaltene Desorptionsgas kann durch eine Fackelleitung (**13c**) verbrannt werden, in den Vorlagebehälter (**10**) für das Heizgas gegeben werden (**13d**) oder direkt in das Heizgas eingespeist werden (**13e**). Wird das Kondensat in das Ausgangsgas (**3**) gegeben, wird es vorteilhaft über einen Zwischenerhitzer (**13f**) wieder verdampft.

FIG. 2 zeigt den erfindungsgemäßen Prozess, in dem auf einen Vakuumvorlagebehälter verzichtet wird. Das Synthesegas wird in einem Reformierofen (**1**) erzeugt, der mit einem kohlenwasserstoffhaltigen Einsatzgas (**2**) und Wasserdampf (**3**) beschickt wird. Dieser wird mit einem kohlenwasserstoffhaltigen Heizgas (**4**) und Luft (**5**) beheizt. Dabei erhält man Synthesegas, welches hier beispielhaft als ein Gemisch von Wasserstoff und Kohlenmonoxid dargestellt ist. Bei der Verbrennung des Heizgases entstehen Abgase (**4a**), die über einen Wärmetauscher (**6**) Dampf erzeugen (**6a**). Die Abgase werden anschließend gekühlt als Rauchgase abgegeben (**6b**). Der Dampf kann bedarfsweise direkt in das Ausgangsgas zurückgeführt werden (**6c**) oder über ein Ventil abgeblasen werden (**6d**). Das erhaltene rohe Synthesegas (**3a**) strömt in eine Kühlvorrichtung (**7**), in der es gekühlt und weiter in die Vorrichtung zur Konvertierung von Kohlenmonoxid (**8**) geleitet wird (**7a**). Handelt es sich bei der Kühleinrichtung um einen Wärmetauscher, so kann aus dem heißen Nutzgas Dampf gewonnen werden (**7b**). In der CO-Konvertierung (**8**) wird das in dem rohen Synthesegas enthaltene Kohlenmonoxid (CO) in Kohlendioxid (CO₂) umgewandelt. Dabei erhält man Synthesegas (**8a**) mit einem Überschuss an Kohlendioxid. Dieses wird in die Vorrichtung zur Druckwechseladsorption (**9**) geleitet. In dieser Einheit wird hier beispielhaft das Kohlendioxid entfernt, so dass man ein gereinigtes Synthesegas (**9a**) erhält, welches überwiegend aus Wasserstoff besteht. Bei der Entspannung der Adsorptionsbehälter erhält man überwiegend desorbiertes Fremdgas (**9b**), welches noch mitadsorbiertes Synthesegas enthält. Dieses wird desorbiert und in den Vorlagebehälter für das Heizgas (**10**) gegeben. Von dort aus kann es beliebig in das Heizgas für die Synthesegaserzeugung (**10a**) eingespeist werden. Nach Ablauf des Desorptionsprozesses wird über den Ejektor (**12**) ein Vakuum angelegt und das Desorptionsgas durch Vakuum über eine Vakuumleitung desorbiert (**9c**). Bedarfweise kann es auch mit dem Desorptionsgas zurückvermischt werden (**10b**). Auf der Austrittsseite des Ejektors (**12**) erhält man das vakuumdesorbierte Gas (**12a**), welches in einen Kondensator (**13**) geleitet wird. Man erhält dadurch ein Kondensat (**13a**). Das erhaltene Desorptionsgas kann durch eine Fackelleitung (**13c**) verbrannt werden, in den Vorlagebehälter (**10**) für das Heizgas gegeben werden (**13d**) oder direkt in das Heizgas eingespeist werden (**13e**).

### Bezugszeichenliste

- 1: Reformierofen
- 2: Kohlenwasserstoffhaltiges Einsatzgas
- 3: Wasserdampf
- 3a: Rohes Synthesegas
- 4: Heizgas
- 4a: Abgase
- 5: Luft
- 6: Wärmetauscher oder Dampferzeuger
- 6ä: Dampf
- 6b: Rauchgas
- 6c: Dampfrückführung
- 6d: Dampfabblaseventil
- 7: Kühlvorrichtung für Synthesegas
- 7a: Gekühltes Synthesegas
- 7b: Dampf
- 8: CO-Konvertierung
- 8a: Synthesegas mit Überschuss Kohlendioxid
- 9: Vorrichtung zur Druckwechseladsorption
- 9a: Gereinigtes Synthesegas
- 9b: Desorbiertes Fremdgas
- 9c: Vakuumleitung
- 10: Vorlagebehälter für Heizgas
- 10a: Heizgaszuführung
- 10b: Heizgasrückführleitung
- 11: Vakuumvorlagebehälter
- 11a: Vakuumleitung
- 12: Ejektor
- 12a: Vakuumdesorbiertes Gas
- 13: Kondensator
- 13a: Kondensiertes Wasser oder Kondensat
- 13b: Kondensatrückführung
- 13c: Fackelleitung
- 13d: Rückführung des getrockneten Desorptionsgases in Vorlagebehälter
- 13e: Rückführung des getrockneten Desorptionsgases in Heizgas
- 13f: Zwischenerhitzer

## Patentansprüche

1. Verfahren zur Abscheidung von Fremdgasen (8a) aus einem reduzierenden Nutzgas (3a) durch Druckwechseladsorption (9), wobei
• durch ein geeignetes einen Heizprozess aufweisendes Verfahren ein reduzierendes Nutzgas (3a) hergestellt wird, welches neben der reduzierenden Komponente auch ein zu adsorbierendes Fremdgas (8a) enthält, und
• dieses Nutzgas (3a) zur Abscheidung von adsorbierbaren Fremdgasen (8a) unter erhöhtem Druck einer Druckwechseladsorptionseinheit (9) zugeführt wird, die die zu adsorbierenden Fremdgase (8a) durch einen adsorptiven Prozess zurückhält, so dass man ein gereinigtes Nutzgas (9a) erhält, und
• die adsorbierten Fremdgase (8a) durch Entspannung der Druckwechseladsorptionseinheit (9) im Gemisch mit Nutzgas (9a) wieder freigesetzt werden , so dass sie weiterverwendet oder entsorgt werden können,
• an die Druckwechseladsorptionseinheit (9) nach der Entspannung mit einem Ejektor (12) zur Desorption ein Vakuum (9c) angelegt wird, wodurch die restlichen adsorbierten Fremdgase (8a) aus der Druckwechseladsorptionseinheit (9) abgezogen werden,
**dadurch gekennzeichnet, dass**
• der Ejektor (12) mit Dampf (6a) angetrieben wird, der durch Erhitzen mit dem heißen Nutzgas (3a) und mit den Rauchgasen (4a) aus dem Heizprozess zur Erzeugung des Nutzgases (3a) erzeugt wird.

2. Verfahren nach Anspruch 1, **dadurch gekennzeichnet, dass** der Dampf hinter dem Ejektor (12) durch eine geeignete Vorrichtung (13) kondensiert und das kondensierte Wasser (13b) in den Prozess zur Erzeugung des Nutzgases (3a) oder in den Dampferzeuger (6) zum Betrieb des Ejektors (12) zugeführt wird.

3. Verfahren nach einem der Ansprüche 1 oder 2, **dadurch gekennzeichnet, dass**
▪ das Nutzgas (3a) Synthesegas ist und der Prozess zur Erzeugung des Nutzgases (3a) ein Dampfreformierprozess ist,
▪ als Prozessgas (2) für die Synthesegaserzeugung ein Gemisch aus Erdgas oder leichten Kohlenwasserstoffen und Wasserdampf genutzt wird.

4. Verfahren nach Anspruch 3, **dadurch gekennzeichnet, dass** nach dem Prozess (1) zur Erzeugung des Nutzgases (3a) und vor der Druckwechseladsorption (9) eine Konvertierung (8) des Kohlenmonoxids mit Wasserdampf zu Kohlendioxid und Wasserstoff erfolgt.

5. Verfahren nach einem der Ansprüche 1 bis 4, **dadurch gekennzeichnet, dass** die in der Druckwechseladsorptionseinheit (9) desorbierten Fremdgase (8a) als Heizgas (4) zur Erzeugung des Nutzgases (3a) genutzt werden oder im Gemisch mit frischem Heizgas als Brenngas (4) zur Erzeugung des Nutzgases (3a) genutzt werden, wobei die durch den Ejektor (12) desorbierten und abgezogenen Fremdgase (8a) direkt durch geeignete Einstellung des Ejektors (12) oder durch geeignete Vorrichtungen mit dem gleichen Druck bereitgestellt werden, mit dem das Heizgas (4) zur Erzeugung des Nutzgases (3a) in den Verbrennungsprozess eingespeist wird.

6. Verfahren nach einem der Ansprüche 1 bis 5, **dadurch gekennzeichnet, dass** die desorbierten Fremdgase (8a) vor der Rückführung (13e) in den Heizprozess zur Erzeugung des Nutzgases (3a) in einen Vorlagebehälter (10) geführt werden, der sich zur Speicherung der desorbierten Fremdgase (8a) oder zur Speicherung der desorbierten Fremdgase (8a) im Gemisch mit einem Heizgas nutzen lässt.

7. Verfahren nach einem der Ansprüche 1 bis 6, **dadurch gekennzeichnet, dass**
▪ der Unterdruck zur Desorption der Druckwechseladsorptionseinheit (9) und die desorbierten Fremdgase (8a) in einem Vorlagebehälter (11) gespeichert werden,
▪ sich der durch den Ejektor (12) erzeugte Unterdruck durch eine weitere Vakuum erzeugende Vorrichtung im Prozessfluss an beliebiger Stelle erhöhen lässt oder der Unterdruck im Vorlagebehälter (11) erhöhen lässt.

8. Verfahren nach einem der Ansprüche 1 bis 7, **dadurch gekennzeichnet, dass** der Ejektor (12) zeitweise oder teilweise oder zeitweise und teilweise mit einem Hilfsgas oder dem Synthesegas oder einem Gemisch aus beiden Gasen betrieben wird, wobei es sich bei dem Hilfsgas ganz oder teilweise um Dampf aus einer anlagenexternen Quelle handelt.

9. Vorrichtung zur Abscheidung von Fremdgasen (8a) aus einem reduzierenden Nutzgas (3a) durch Druckwechseladsorption (9), die
• einen Anlagenteil mit einer Heizeinrichtung zur Erzeugung des Nutzgases (3a) umfasst, wobei
• sich an den Anlagenteil zur Erzeugung des Nutzgases (3a) ein Anlagenteil mit einer Druckwechseladsorption (9) zur Abscheidung von Fremdgasen (8a) anschließt, und
• der Anlagenteil zur Druckwechseladsorption (9) über einen Ejektor (12), der zur Erzeugung eines Unterdrucks geeignet ist, zur vollständigen Desorption mit Vakuum beaufschlagbar ist,
**dadurch gekennzeichnet, dass**
• sich hinter der Heizeinrichtung oder dem Anlagenteil (1) zur Erzeugung des Nutzgases (3a) ein Dampferzeuger (7) befindet, der das heiße Rauchgas (4a) und heiße Nutzgas (3a) aus dem Heizprozess zur Erzeugung von heißem Dampf nutzt, und
• der aus dem Dampferzeuger stammende Dampf zum Antrieb des Ejektors (12) genutzt wird.

10. Vorrichtung nach Anspruch 9, **dadurch gekennzeichnet, dass** sich an der antriebsseitigen Austrittsleitung des Ejektors (12) eine Vorrichtung (13) befindet, mit der sich der zum Antrieb des Ejektors (12) genutzte Dampf kondensieren lässt, wobei sich an die kondensierende Einrichtung (13) Rohrleitungen anschließen, mit denen sich das Kondensat als Ausgangskomponente (13b) in den Prozess der Nutzgaserzeugung zurückführen lässt..

11. Vorrichtung nach einem der Ansprüche 9 oder 10, **dadurch gekennzeichnet, dass** sich hinter der Vorrichtung (1) zur Erzeugung des Nutzgases (3a) eine Vorrichtung (8) zur Konvertierung von Kohlenmonoxid befindet, die in dem reduzierenden Nutzgas (3a) enthaltenes Kohlenmonoxid in ein Gemisch (8a) aus Kohlendioxid und Wasserstoff umwandelt.

12. Vorrichtung nach einem der Ansprüche 11, **dadurch gekennzeichnet, dass** sich zwischen der Erzeugungseinheit (1) für die Erzeugung des Nutzgases (3a) und der Vorrichtung (8) zur Konvertierung des Kohlenmonoxids eine Kühlungsvorrichtung (7) für das Nutzgas (3a) befindet, wobei es sich bei der Kühlungsvorrichtung (7) für das Nutzgas (3a) um einen Dampferzeuger handelt.

13. Vorrichtung nach einem der Ansprüche 11 bis 12, **dadurch gekennzeichnet, dass** sich hinter der Vorrichtung (8) zur Konvertierung des Kohlenmonoxids eine Kühlungsvorrichtung für das Nutzgas (3a) befindet, wobei es sich bei der Kühlungsvorrichtung für das Nutzgas (3a) hinter der Vorrichtung zur Konvertierung des Kohlenmonoxids um einen Dampferzeuger handelt.

14. Vorrichtung nach einem der Ansprüche 9 bis 13, **dadurch gekennzeichnet, dass** sich hinter der Druckwechseladsorptionseinheit (9) auf der Saugseite des Ejektors (12) ein Vorlagebehälter (11) für das erzeugte Vakuum befindet.

15. Vorrichtung nach einem der Ansprüche 9 bis 14, **dadurch gekennzeichnet, dass** sich hinter der Druckwechseladsorptionseinheit (9) ein Vorlagebehälter (10) für Heizgas befindet, der auch über die Austrittsseite des Ejektors (12) oder über einen dem Ejektor (12) nachgeschalteten Kondensator (13) über Rohrleitungen (13d) mit den desorbierten Fremdgasen (8a) versorgt werden kann.

16. Vorrichtung nach einem der Ansprüche 9 bis 15, **dadurch gekennzeichnet, dass** sich saugseitig hinter dem Ejektor (12) eine Vorrichtung befindet, die Vakuum erzeugt, so dass sich mit dieser das durch den Ejektor (12) erzeugte Vakuum verstärken lässt.

## Claims

1. Process for separating foreign gases (8a) from a reducing useful gas (3a) by pressure swing adsorption (9), where
• a reducing useful gas (3a) which contains the reducing component and also a foreign gas (8a) to be adsorbed is produced by a suitable process comprising a heating process and
• this useful gas (3a) is fed under elevated pressure to a pressure swing adsorption unit (9) which holds back the foreign gases (8a) to be adsorbed by means of an adsorptive process in order to separate off adsorbable foreign gases (8a) and give a purified useful gas (9a) and
• the adsorbed foreign gases (8a) are liberated again in admixture with useful gas (9a) by depressurization of the pressure swing adsorption unit (9) so that they can be used further or disposed of,
• after the depressurization a vacuum (9c) is applied to the pressure swing adsorption unit (9) by means of an ejector (12) to effect desorption, as a result of which the remaining adsorbed foreign gases (8a) are taken off from the pressure swing adsorption unit (9),
**characterized in that**
• the ejector (12) is driven by means of steam (6a) which is generated by heating with the hot useful gas (3a) and the flue gases (4a) from the heating process for producing the useful gas (3a).

2. Process according to Claim 1, **characterized in that** the steam is condensed downstream of the ejector (12) by means of a suitable apparatus (13) and the condensed water (13b) is fed into the process for producing the useful gas (3a) or into the steam generator (6) for operating the ejector (12).

3. Process according to either Claim 1 or 2, **characterized in that**
▪ the useful gas (3a) is synthesis gas and the process for producing the useful gas (3a) is a steam reforming process,
▪ a mixture of natural gas or light hydrocarbons and steam is utilized as process gas (2) for the production of the synthesis gas.

4. Process according to Claim 3, **characterized in that**, after the process (1) for producing the useful gas (3a) and before the pressure swing adsorption (9), a conversion (8) of the carbon monoxide by means of steam to give carbon dioxide and hydrogen is carried out.

5. Process according to any of Claims 1 to 4, **characterized in that** the foreign gases (8a) desorbed in the pressure swing adsorption unit (9) are utilized as heating gas (4) for producing the useful gas (3a) or are used in admixture with fresh heating gas as fuel gas (4) for producing the useful gas (3a), where the foreign gases (8a) which are desorbed and taken off by means of the ejector (12) are provided directly by suitable setting of the ejector (12) or by means of suitable apparatuses with the same pressure at which the heating gas (4) for producing the useful gas (3a) is fed into the combustion process.

6. Process according to any of Claims 1 to 5, **characterized in that** the desorbed foreign gases (8a) are, before recirculation (13e) into the heating process for producing the useful gas (3a), conveyed into a reservoir (10) which can be utilized for storage of the desorbed foreign gases (8a) or for storage of the desorbed foreign gases (8a) in admixture with a heating gas.

7. Process according to any of Claims 1 to 6, **characterized in that**
▪ the reduced pressure for desorption in the pressure swing adsorption unit (9) and the desorbed foreign gases (8a) are stored in a reservoir (11),
▪ the reduced pressure generated by the ejector (12) can be increased by means of a further vacuum-generating apparatus at any point in the process flow or the reduced pressure can be increased in the reservoir (11).

8. Process according to any of Claims 1 to 7, **characterized in that** the ejector (12) is at times or partly or at times and partly driven by an auxiliary gas or the synthesis gas or a mixture of the two gases, where the auxiliary gas is entirely or partly steam from a source external to the plant.

9. Apparatus for separating foreign gases (8a) from a reducing useful gas (3a) by pressure swing adsorption (9), which
• comprises a plant part having a heating device for producing the useful gas (3a), where
• the plant part for producing the useful gas (3a) is followed by a plant part comprising a pressure swing adsorption (9) for separating off foreign gases (8a) and
• the vacuum can be applied to the plant part for the pressure swing adsorption (9) by means of an ejector (12) which is suitable for generating a reduced pressure in order to effect complete desorption,
**characterized in that**
• a steam generator (7) which utilizes the hot flue gas (4a) and hot useful gas (3a) from the heating process for generating hot steam is located downstream of the heating device or the plant part (1) for producing the useful gas (3a) and
• the steam coming from the steam generator is utilized for driving the ejector (12).

10. Apparatus according to Claim 9, **characterized in that** an apparatus (13) by means of which steam which has been utilized for driving the ejector (12) can be condensed is located at the drive-side outlet line of the ejector (12), where pipes by means of which the condensate can be recirculated as starting component (13b) into the process for producing useful gas are connected to the condensing apparatus (13).

11. Apparatus according to either Claim 9 or 10, **characterized in that** an apparatus (8) for converting carbon monoxide, which converts carbon monoxide present in the reducing useful gas (3a) into a mixture (8a) of carbon dioxide and hydrogen, is located downstream of the apparatus (1) for producing the useful gas (3a).

12. Apparatus according to Claim 11, **characterized in that** a cooling apparatus (7) for the useful gas (3a) is located between the production unit (1) for producing the useful gas (3a) and the apparatus (8) for conversion of the carbon monoxide, where the cooling apparatus (7) for the useful gas (3a) is a steam generator.

13. Apparatus according to either Claim 11 or 12, **characterized in that** a cooling apparatus for the useful gas (3a) is located downstream of the apparatus (8) for conversion of the carbon monoxide, where the cooling apparatus for the useful gas (3a) downstream of the apparatus for conversion of the carbon monoxide is a steam generator.

14. Apparatus according to any of Claims 9 to 13, **characterized in that** a reservoir (11) for the vacuum generated is located downstream of the pressure swing adsorption unit (9) on the suction side of the ejector (12).

15. Apparatus according to any of Claims 9 to 14, **characterized in that** a reservoir (10) for heating gas which can be supplied with the desorbed foreign gases (8a) via pipes (13d) from the outlet side of the ejector (12) or from a condenser (13) downstream of the ejector (12) is located downstream of the pressure swing adsorption unit (9).

16. Apparatus according to any of Claims 9 to 15, **characterized in that** an apparatus which generates vacuum is located on the suction side downstream of the ejector (12) so that this is able to reinforce the vacuum generated by the ejector (12).

## Revendications

1. Procédé de séparation de gaz étrangers (8a) contenus dans un gaz utile réducteur (3a) par adsorption modulée en pression (9), selon lequel
- un gaz utile réducteur (3a), qui, en plus du composant réducteur, contient également un gaz étranger (8a) à adsorber, est fabriqué par un procédé approprié comprenant un procédé de chauffage, et
- ce gaz utile (3a) est introduit pour la séparation de gaz étrangers adsorbables (8a) sous pression élevée dans une unité d'adsorption modulée en pression (9), qui retient les gaz étrangers à adsorber (8a) par un procédé d'adsorption, de manière à obtenir un gaz utile purifié (9a), et
- les gaz étrangers adsorbés (8a) sont libérés par détente de l'unité d'adsorption modulée en pression (9) en mélange avec le gaz utile (9a), de manière à pouvoir être utilisés ultérieurement ou mis au rebus,
- un vide (9c) est appliqué à l'unité d'adsorption modulée en pression (9) après la détente avec un éjecteur (12) pour la désorption, les gaz étrangers adsorbés restants (8a) étant ainsi soutirés de l'unité d'adsorption modulée en pression (9),
**caractérisé en ce que**
- l'éjecteur (12) est actionné avec de la vapeur (6a), qui est générée par chauffage avec le gaz utile chaud (3a) et avec les gaz de fumée (4a) issus du procédé de chauffage pour la génération du gaz utile (3a).

2. Procédé selon la revendication 1, **caractérisé en ce que** la vapeur est condensée après l'éjecteur (12) par un dispositif approprié (13) et l'eau condensée (13b) est introduite dans le procédé de génération du gaz utile (3a) ou dans le générateur de vapeur (6) pour l'actionnement de l'éjecteur (12).

3. Procédé selon l'une quelconque des revendications 1 ou 2, **caractérisé en ce que**
- le gaz utile (3a) est un gaz de synthèse et le procédé de génération du gaz utile (3a) est un procédé de reformage à la vapeur,
- un mélange de gaz naturel ou d'hydrocarbures légers et de vapeur d'eau est utilisé en tant que gaz de procédé (2) pour la génération du gaz de synthèse.

4. Procédé selon la revendication 3, **caractérisé en ce qu'**une conversion (8) du monoxyde de carbone avec de la vapeur d'eau en dioxyde de carbone et en hydrogène a lieu après le procédé (1) de génération du gaz utile (3a) et avant l'adsorption modulée en pression (9).

5. Procédé selon l'une quelconque des revendications 1 à 4, **caractérisé en ce que** les gaz étrangers (8a) désorbés dans l'unité d'adsorption modulée en pression (9) sont utilisés en tant que gaz de chauffage (4) pour la génération du gaz utile (3a) ou sont utilisés en mélange avec un gaz de chauffage frais en tant que gaz de combustion (4) pour la génération du gaz utile (3a), les gaz étrangers (8a) désorbés et soutirés par l'éjecteur (12) étant préparés directement par ajustement approprié de l'éjecteur (12) ou par des dispositifs appropriés à la même pression que celle à laquelle le gaz de chauffage (4) est introduit dans le procédé de combustion pour la génération du gaz utile (3a).

6. Procédé selon l'une quelconque des revendications 1 à 5, **caractérisé en ce que** les gaz étrangers désorbés (8a) sont introduits avant le recyclage (13e) dans le procédé de chauffage pour la génération du gaz utile (3a) dans un contenant de stockage (10), qui peut être utilisé pour le stockage des gaz étrangers désorbés (8a) ou pour le stockage des gaz étrangers désorbés (8a) en mélange avec un gaz de chauffage.

7. Procédé selon l'une quelconque des revendications 1 à 6, **caractérisé en ce que**
- la sous-pression pour la désorption de l'unité d'adsorption modulée en pression (9) et les gaz étrangers désorbés (8a) sont stockés dans un contenant de stockage (11),
- la sous-pression générée par l'éjecteur (12) peut être augmentée par un dispositif générant un vide supplémentaire à un emplacement quelconque dans le flux de procédé ou la sous-pression dans le contenant de stockage (11) peut être augmentée.

8. Procédé selon l'une quelconque des revendications 1 à 7, **caractérisé en ce que** l'éjecteur (12) est actionné temporairement ou partiellement ou temporairement et partiellement avec un gaz auxiliaire ou le gaz de synthèse ou un mélange des deux gaz, le gaz auxiliaire consistant en totalité ou en partie en de la vapeur issue d'une source externe à l'unité.

9. Dispositif pour la séparation de gaz étrangers (8a) contenus dans un gaz utile réducteur (3a) par adsorption modulée en pression (9), qui comprend
- une partie d'unité comprenant un dispositif de chauffage pour la génération du gaz utile (3a),
- une partie d'unité comprenant une adsorption modulée en pression (9) pour la séparation de gaz étrangers (8a) suivant la partie d'unité pour la génération du gaz utile (3a), et
- un vide pouvant être appliqué à la partie d'unité pour l'adsorption modulée en pression (9) par un éjecteur (12), qui est approprié pour la génération d'une sous-pression, pour la désorption complète, **caractérisé en ce que**
- un générateur de vapeur (7) se trouve après le dispositif de chauffage ou la partie d'unité (1) pour la génération du gaz utile (3a), ledit générateur utilisant le gaz de fumée chaud (4a) et le gaz utile chaud (3a) issu du procédé de chauffage pour la génération de vapeur chaude, et
- la vapeur provenant du générateur de vapeur est utilisée pour l'actionnement de l'éjecteur (12).

10. Dispositif selon la revendication 9, **caractérisé en ce qu'**un dispositif (13) se trouve au niveau de la conduite de sortie du côté de l'actionnement de l'éjecteur (12), avec lequel la vapeur utilisée pour l'actionnement de l'éjecteur (12) peut être condensée, des canalisations étant connectées au dispositif de condensation (13), avec lesquelles le condensat peut être recyclé dans le procédé de génération du gaz utile en tant que composant de départ (13b).

11. Dispositif selon l'une quelconque des revendications 9 ou 10, **caractérisé en ce qu'**un dispositif (8) pour la conversion de monoxyde de carbone se trouve après le dispositif (1) pour la génération du gaz utile (3a), dans lequel le monoxyde de carbone contenu dans le gaz utile réducteur (3a) est transformé en un mélange (8a) de dioxyde de carbone et d'hydrogène.

12. Dispositif selon la revendication 11, **caractérisé en ce qu'**un dispositif de refroidissement (7) pour le gaz utile (3a) se trouve entre l'unité de génération (1) pour la génération du gaz utile (3a) et le dispositif (8) pour la conversion du monoxyde de carbone, le dispositif de refroidissement (7) pour le gaz utile (3a) consistant en un générateur de vapeur.

13. Dispositif selon l'une quelconque des revendications 11 à 12, **caractérisé en ce qu'**un dispositif de refroidissement pour le gaz utile (3a) se trouve après le dispositif (8) pour la conversion du monoxyde de carbone, le dispositif de refroidissement pour le gaz utile (3a) après le dispositif de conversion du monoxyde de carbone consistant en un générateur de vapeur.

14. Dispositif selon l'une quelconque des revendications 9 à 13, **caractérisé en ce qu'**un contenant de stockage (11) pour le vide généré se trouve après l'unité d'adsorption modulée en pression (9) du côté de l'aspiration de l'éjecteur (12).

15. Dispositif selon l'une quelconque des revendications 9 à 14, **caractérisé en ce qu'**un contenant de stockage (10) pour le gaz de chauffage se trouve après l'unité d'adsorption modulée en pression (9), ledit contenant pouvant également être alimenté avec les gaz étrangers désorbés (8a) par des canalisations (13d) par le côté de sortie de l'éjecteur (12) ou par un condensateur (13) connecté en aval de l'éjecteur (12).

16. Dispositif selon l'une quelconque des revendications 9 à 15, **caractérisé en ce qu'**un dispositif se trouve du côté de l'aspiration après l'éjecteur (12), ledit dispositif générant un vide de manière à ce que le vide généré par l'éjecteur (12) puisse être renforcé avec celui-ci.
